Europäisches Patentamt

European Patent Office

Office européen des brevets

(19)

(11) Publication number: 0 570 037 A1

# EUROPEAN PATENT APPLICATION

(21) Application number: 93200960.8

(22) Date of filing: 05.04.93

(51) Int. Cl.5: G02B 27/00, G09G 5/10

(30) Priority: 15.05.92 US 884096

(43) Date of publication of application:
18.11.93 Bulletin 93/46

(84) Designated Contracting States:
DE FR GB

(71) Applicant: GENERAL MOTORS CORPORATION
General Motors Building
3044 West Grand Boulevard
Detroit Michigan 48202(US)
Applicant: DELCO ELECTRONICS
CORPORATION
700 East Firmin Street
Kokomo Indiana 46902(US)

(72) Inventor: Godwin, Paul Billion
8454 Harder Drive
Warren, Michigan 48093(US)
Inventor: Murphy, Morgan Daniel
1616 Greenacres Drive
Kokomo, Indiana 46901(US)
Inventor: Thoeny, Michael Benjamin
633 White Pine Drive
Noblesville, Indiana 46060(US)
Inventor: Igram, Dale James
4308 Broodside Drive
Kokomo, Indiana 46902(US)

(74) Representative: Jehan, Robert et al
Patent Section,
1st Floor,
Gideon House,
28 Chapel Street
Luton, Bedfordshire LU1 2SE (GB)

(54) Head-up display system.

(57) A head-up display system comprises apparatus (30) for projecting a virtual image (13) of information to be viewed by a vehicle operator at an image plane (12) forward of the vehicle operator, a sensing device (18) for sensing the background illumination of the image plane, and a controller (30) responsive to the sensing device (18) for actively controlling the brightness of the projected image (13) at the image plane (12) to maintain the projected image (13) at a constant contrast level with the background illumination (12). In case of a multi-coloured display, each colour is controlled separately.

FIG. 1

This invention relates to a head-up display system.

In typical vehicle head-up displays, image brightness is controlled by the vehicle driver through a dimmer control mounted on the instrument panel. In some systems, the head-up display image intensity is adjusted for day/night driving through the headlamp switch. That is, when either the parking lights or the head lights of the vehicle are on, the head-up display image has a reduced intensity based on the assumption that the vehicle lights are on for night time driving.

Other implementations have added a photocell in the head-up display unit to sense day/night conditions independently of the vehicle headlamp switch. This photocell toggles the system between one of two intensity levels, the high intensity level for daylight driving and the low intensity level for night time operation.

The present invention seeks to provide an improved head-up display system.

According to an aspect of the present invention, there is provided a head-up display system as specified in claim 1.

The invention can provide an active brightness control system for a head-up display system which can maintain the projected head-up display image at a desired contrast ratio with background illumination, in which the background illumination is the ambient light intensity of the scenery in front of the vehicle at the position at which the head-up display image is viewed. The invention can provide active image brightness control, eliminating the necessity of driver adjustment of the brightness control to compensate for variations in background illumination.

Preferably, there is provided vehicle head-up display apparatus which can automatically maintain the image intensity/background illumination contrast ratio in situations of daylight driving varying from cloudy to sunny. Advantageously, there is provided a head-up display system which can maintain the image intensity/background illumination contrast ratio when a vehicle is driven into and out of roadway tunnels. Preferably, there is provided a vehicle head-up display system which can maintain image intensity/background illumination contrast ratio in situations of a vehicle driving on a sunny day through shaded tree-lined areas. Advantageously, there is provided a vehicle head-up display system which can adjust to background illumination levels without constant flicker of the projected display. Preferably, there is provided a head-up display system which can project a multi-coloured display and which can adjust each colour of the display independently in response to background illumination.

A preferred embodiment comprises a head-up display unit for projecting an image to be viewed by a vehicle operator at an image plane forward of the vehicle windshield. Sensing means is included for sensing the background illumination proximate the image plane. Control means responsive to the sensing means controls the head-up display unit to project an image varying in intensity to appear to a vehicle operator at a constant contrast level to the background illumination.

An embodiment of the present invention is described below, by way of illustration only, with reference to the accompanying drawings, in which:

Figure 1 is an illustration of an embodiment of head-up display controller fitted in an automotive vehicle;

Figure 2 is a more detailed illustration of the controller of Figure 1;

Figure 3 is a flow chart of an embodiment of control routine for the controller of Figure 2;

Figure 4 is an illustration of an embodiment of controller for controlling multi-colour head-up displays;

Figure 5 is a view of a portion of the controller of Figure 4; and

Figures 6a and 6b are a flow chart of an embodiment of control routine for the controller shown in Figures 4 and 5.

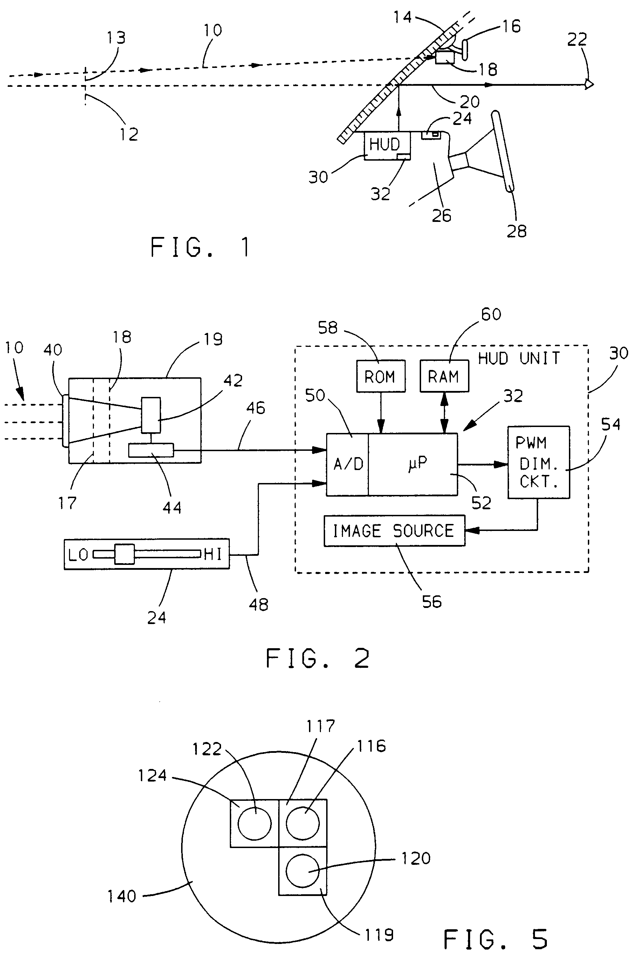

Referring to Figure 1, a head-up display unit 30 is located in the instrument panel 26 of a motor vehicle and comprises means for projecting a head-up display virtual image 13 at image plane 12. The head-up display unit 30 comprises any suitable head-up display unit, such as the unit disclosed in US-A-4,973,139. The head-up display unit 30 projects light along path 20 to reflect the light off of the vehicle windshield 14 to be viewed by the driver's eye 22, which perceives a virtual image 13 of the information projected by the head-up display unit 30 at image plane 12.

Mounted within the vehicle, shown here on rear view mirror support 16, is a sensor 18 for sensing the ambient light level or illumination of the background of image plane 12. Light rays 10 enter the sensor 18 with the result that sensor 18 provides a signal indicative of the background illumination intensity to controller 32 incorporated within the head-up display unit. Responsive to the signal from the sensor 18, the controller 32 adjusts a brightness control output signal so that the brightness of the virtual image 13 projected at image plane 12 is actively controlled to increase and decrease with the brightness of the background illumination at image plane 12. Preferably, the intensity of the vertical image 13 is maintained at a constant ratio with the background illumination at the image plane 12.

Also disposed on the instrumentation panel 26 is an adjuster 24 for driver adjustment of the desired contrast of the virtual image 13 at image plane 12. The vehicle driver controls the adjuster 24 so that the virtual image 13 at image plane 12 is at a comfortable intensity level and contrast level for the driver. As the vehicle is driven and enters situations where the background illumination varies, the controller 32 automatically adjusts the brightness of the image source in the head-up display unit 30 so that the virtual image 13 at the image plane 12 appears to the driver to remain at a substantially constant intensity contrast level with the background illumination.

Referring to Figure 2, the sensor 18, in this embodiment, includes a housing 19 with a detector 42, such as a photocell, disposed therein. A lens 40 on the front of housing 19 focuses the light arriving from a location in the background of image plane 12 onto the detector 42 so that the impedance across detector 42 responds to background illumination at image plane 12. In alternative embodiments, the lens 40 may focus onto a background area large enough such that, regardless of the position adjustment of image 13, the light striking detector 18 is representative of the background illumination of the image plane.

A biasing circuit 44 feeds a biasing voltage to detector 42, which provides an output signal on line 46 having a voltage related to the amount of light falling on detector 42. If desired, a filter 17 passing light of a colour representative of the projected image may be placed between the lens and the detector 42 so that the sensor 18 is responsive only to colours which affect the visibility of the virtual image 13 projected at image plane 12.

In the head-up display unit 30, the controller 32 shown comprises a microprocessor with analogue to digital converters 50, read only and random access (ROM and RAM) memory units 58 and 60, a dimming control circuit 54 and an image source 56. The analogue to digital converters 50 receive signals from sensor 18 and contrast adjuster 24 through lines 46 and 48, respectively. The contrast adjuster 24 shown is a slidable lever-type potentiometer.

In response to the signals received through lines 46 and 48, the microprocessor 52 processes information to provide a command output signal comprising a substantially continuous range intensity signal to the dimming control circuit 54, shown here as a pulse-width modulation circuit.

In response to the command from microprocessor 52, the dimming control circuit 54 drives a suitable image source 56, such as a vacuum fluorescent display image source, at an intensity responsive to the signals on lines 46 and 48. The resultant projected virtual image 13 appears to the driver to have a constant contrast with respect to background illumination so that, as the background illumination changes between very bright and very dark and levels in between, the projected virtual image 13 at image plane 12 remains easily readable with a substantially constant contrast.

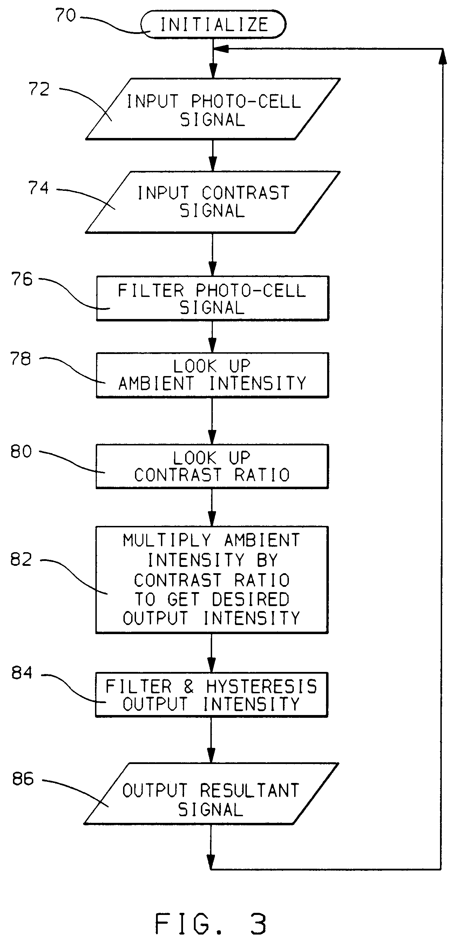

Referring to Figure 3, there is shown a flow chart of an embodiment of routine, which may be stored in read only memory 58 and executed by microprocessor 52 to perform control functions. The routine starts at step 70 where it initializes the system. At step 72, the microprocessor inputs the sense signal from line 46 and, at step 74, inputs the contrast signal on line 48.

Microprocessor 52 comprises means for first filtering the sense signal received through line 46 through implementation of a filtering step 76. Filtering the sense signal at this stage helps dampen the affect of rapidly changing signals on line 46. An example situation in which rapidly changing signals occur is when a vehicle is driven on a bright sunny day down a road shaded with trees through which various pockets of sunlight shine. As the vehicle travels down the shaded road, the pockets of sunlit and shaded areas are rapidly passed by the vehicle so that the sensor 18 outputs a rapidly varying signal on line 46. To prevent the projected image at image plane 12 from flickering with the rapidly varying signal, the signal is filtered. An example of a suitable filter routine is to average several of the most recent signals sampled from line 46. Any other suitable filter routine may be implemented.

The microprocessor 52 is also adapted to determine a substantially continuous range output intensity signal in response to the first filtered sense signal. At step 78 the microprocessor 52 looks up, from a look-up table stored in read only memory 58, an ambient intensity signal in response to the filtered sense signal. The look-up table provides greater magnitude ambient intensity signals in response to greater magnitude sense signals.

At step 80, the microprocessor 52 looks up, from a look-up table stored in read only memory 58, a contrast ratio signal in response to the input contrast signal from line 48. The look-up table for the contrast ratio signal provides greater magnitude contrast ratio signals in response to greater magnitude contrast signals.

At step 82 the contrast ratio signal is multiplied by the ambient intensity signal to obtain a desired output intensity signal. Alternatively, the output intensity signal may be determined as:

Output intensity = ambient intensity*(contrast ratio - 1).

At step 84 the output intensity signal is filtered to prevent rapid changes in the projected display and has hysteresis applied in a simple hysteresis routine to prevent flickering of the display. A simple hysteresis routine may be, for example, to wait for two or more consecutive decreasing signals before decreasing the intensity of the image source and to wait for two or more consecutive increasing signals before increasing the intensity of the image source. In this manner, rapid flickering of the display can be eliminated.

The routine then moves to step 86 to output the resultant output intensity signal from the filter and hysteresis step 84. The resultant output intensity signal has a substantially continuous range between minimum intensity and maximum intensity for control of the image source 56 over a large range of intensities.

The dimming circuit 54 comprises means for controlling the intensity of the image of the head-up display in response to the continuous range intensity signal by driving the image source 56 at the desired brightness. The routine then returns to step 72 to repeat the process.

The above-described controller provides for sensing of the ambient conditions in the background of the virtual image plane of the head-up display. In response to the sensed conditions, the head-up display is controlled so that the projected image is automatically adjusted to maintain a substantially constant contrast ratio with the background illumination and is therefore generally always easily readable by the vehicle driver.

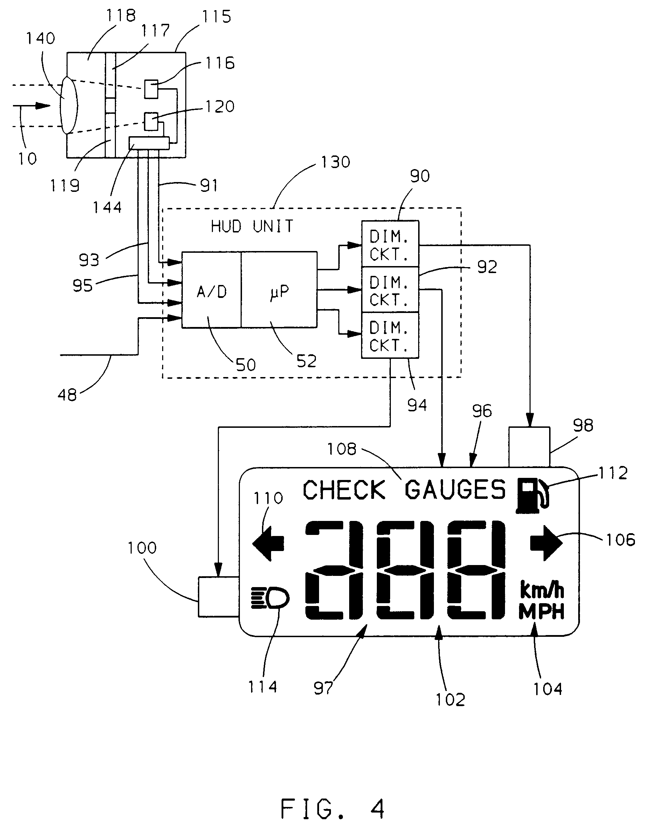

Referring to Figure 4, there is shown a multi-coloured head-up display image source 96. The multi-coloured image source 96 comprises a vacuum fluorescent display 97 in an example configuration with typical blue-green vacuum fluorescent symbols for vehicle speed 102, a check gauges warning 108, right and left turn signals 106 and 110 and an English/metric speed scale indicator 104. Included in the display is a high beam signal warning 114, which may have a different colour from that of vacuum fluorescent display 97, for example blue or amber. The warning 114 may be illuminated by an incandescent bulb (not shown) in housing 100 with a filter of the desired colour. Also included in the display is a low fuel level indicator 112, which is also illuminated by an incandescent bulb, in housing 98, with colour such as amber or red controlled by a colour filter. A suitable structure for the implementation of warnings 112 and 114 is shown in our copending European patent application EP-A-0,519,541.

The multi-colour image source 96 projects a virtual image (similar to virtual image 13, Figure 1) in various colours viewed by the driver of the vehicle. As a result of the multi-colour nature of the virtual image, different portions of the image may be easier to read than other portions in certain background illumination levels. As shown in Figures 4, 5 and 6, each colour of the image source 96 is controlled separately to alleviate any such problems.

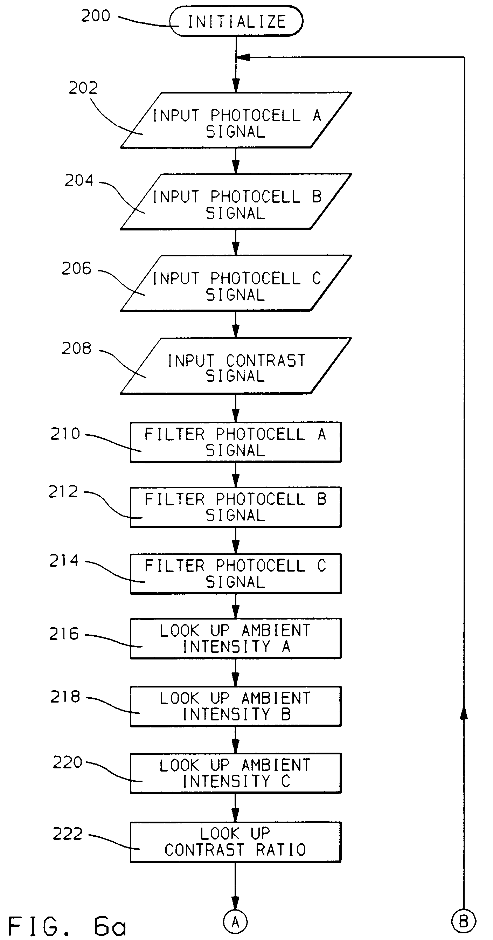

Referring again to Figures 4 and 5, sensor 118 comprises a housing 115 with a lens 140 at its front, sensing end. The lens 140 focuses light from the background of the projected image plane onto several detector photocells 116, 120 and 122 in the sensing means 118. Located between the lens 140 and the detectors 116, 120 and 122, are filters 117, 119 and 124 corresponding to the colour controls of their respective detectors. In one example, filter 117 is a blue-green filter filtering light received by detector 116, in response to which the vacuum fluorescent portion of the display 96 is controlled. Filter 119, disposed between lens 140 and detector 120 is, in one example, a filter corresponding to the colour of the high beam warning 114. Filter 124, disposed between detector 122 and lens 140 is, in one example, the colour of the low fuel level warning 112.

In the apparatus shown, detectors 116, 120 and 122 are responsive to the colour components of the background illumination corresponding to the respective filters 117, 119 and 124. In place of single lens 140, an individual lense for each detector may be used.

The detectors 116, 120 and 122 are biased by biasing circuit 144 and provide output signals on lines 91, 93 and 95 which are fed to the analogue to digital converter 50 of microprocessor 52. Microprocessor 52 also receives the contrast signal from line 48. The microprocessor 52 processes the signals from the three detectors 116, 120 and 122, in a similar manner to the signal processed from the single detector 42 in Figure 2, and provides three substantially continuous range intensity control signals to the three dimming control circuits 90, 92 and 94.

Dimming control circuits 90 and 94 may be any type of suitable dimming control for an incandescent bulb. Such dimming control circuits are well known to those skilled in the art. Dimming control circuit 92 is suitable for controlling a vacuum fluorescent display and may be a pulse-width modulated dimming control circuit of the type used in Figure 2. In response to the commands from the microprocessor 52, the dimming control circuits 90, 92 and 94 control the respective colour components of the image source 96 to brighten individual colours independently.

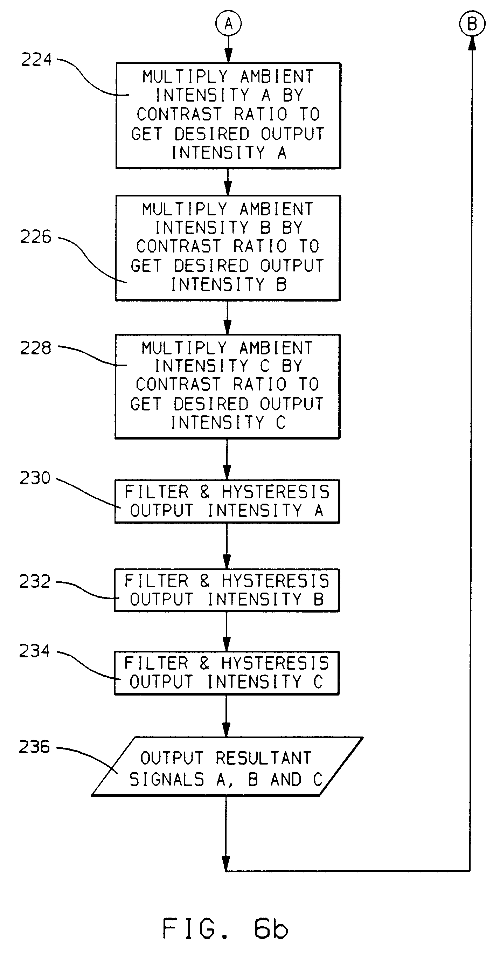

The routine shown in Figures 6a and 6b is suitable for use with the apparatus shown on Figures 4 and 5 and is similar in part to the routine shown in Figure 3. The routine begins at step 200 where it initializes the microprocessor and then moves to steps 202, 204 and 206 where it inputs the signals from detectors 116, 120 and 122 through lines 91, 93 and 95. The contrast signal is input at step 208 from line 48 and the microprocessor moves to steps 210, 212 and 214 where it filters the three sense signals from lines 91, 93 and 95.

In this implementation, three ambient intensity signal look-up tables are provided, with each colour component of the display having allocated thereto a look-up table. At steps 216, 218 and 220 the routine looks up ambient intensity signals for each of the colour components in response to the signals filtered at steps 210, 212, and 214. At step 222, a contrast ratio signal is looked up in response to the signal received on line 48. At steps 224, 226 and 228 the three desired output intensity signals for the three colour components of the display are computed by multiplying the respective ambient intensity signals by the contrast ratio found at step 222. Filtering and hysteresis is applied at steps 230, 232 and 234 to the output intensity signals to prevent gauge flickering and at step 236 the output signals resulting from the filtering and hysteresis at steps 230, 232 and 234 are fed to the dimming control circuits.

In this manner, the above-described apparatus provides a head-up display with active control of image intensity in which each colour component of the image is individually controlled.

The above-described embodiments may be modified in a variety of ways. For example, the microprocessor 52 may be replaced by dedicated processing circuitry or analogue equivalents. In microprocessor implementations, many variations to the filter routine in the microprocessor may be made. In the multi-colour implementation of Figures 4, 5 and 6, the individual colour components of the display may be limited to two or may be more than the three shown, in which instance the number of detectors in the sensor may be altered correspondingly. Additionally, colours close together may be controlled by the same detector. In addition, the detectors in the sensor may be any type of photo-responsive devices, such photo-diodes or photo-transistors. Variations on the image source may include liquid crystal displays, different coloured vacuum fluorescent displays, light emitting diodes, incandescent warning displays, cathode ray tube displays or any other suitable type of display.

The disclosures in United States patent application no 884,096, from which this application claims priority, and in the abstract accompanying this application are incorporated herein by reference.

## Claims

1. A head-up display system comprising projecting means (30) for projecting an image of information for viewing by a vehicle driver at an image plane substantially in front of the vehicle driver; sensing means (18) for sensing a background illumination level at the image plane; and control means (30) for controlling the intensity of the projected image on the basis of the sensed background illumination level.

2. A head-up display system according to claim 1, wherein the processing means is adapted to project an image including at least two image colour components; the sensing means comprising for each image colour component a detector (116,120,122) responsive to a background colour component corresponding to one of the image colour components to provide a background illumination level indicative of the intensity level of each background colour component; the control means being adapted to control the intensities of the image colour components on the basis of the background illumination levels produced by the detectors.

3. A head-up display system according to claim 2, wherein the sensing means comprises a light filter (117,119,124) for each detector for causing each detector to detect only the colour component associated therewith.

4. A head-up display system according to claim 2 or 3, wherein the projecting means is adapted to project an image having at least two colours and the control means is adapted to control the intensity of at least one of the colours of the image independently in response to the background illumination level detected by the associated detector.

5. A head-up display system according to any preceding claim, comprising a signal filter (52) for filtering the or each sensed background illumination level; generating means (52) for generating a substantially continuous range intensity signal in response to the or each filtered background illumination level, the control means being responsive to the range intensity signal.

6. A head-up display system according to claim 5, comprising a second signal filter (52) for filtering the continuous range intensity signal.

**7.** A head-up display system according to any preceding claim, comprising contrast adjustment means (24) for setting a desired contrast level for the projected image.

**8.** A head-up display system according to claim 7, wherein the control means is adapted to determine a contrast ratio in response to the desired contrast level, to multiply the contrast ratio by the background illumination level or levels and to control the intensity of the projected image in response to the product of the contract ratio and the background illumination level or levels.

**9.** A head-up display system according to claim 8, wherein the control means is adapted to apply hysteresis to the product of the contrast ratio and the background illumination level or levels.

**10.** A head-up display system according to claim 7, 8 or 9, wherein the contrast adjustment means includes a potentiometer (24) in use mounted on a vehicle instrument panel.

**11.** A head-up display system according to any preceding claim, wherein the projecting means includes a vacuum fluorescent image source (96).

**12.** A head-up display system according to claim 11, comprising a dimming control circuit (92) responsive to the control means for controlling the brightness of the image produced by the vacuum fluorescent image source.

**13.** A head-up display system according to claim 12, wherein the control means is adapted to feed a pulse-width modulation control signal to the dimming control circuit for use in controlling the brightness of the image produced by the vacuum fluorescent image source.

**14.** A head-up display system according to any preceding claim, comprising at least one lens (42) for focussing light onto the or a respective detector.

**15.** A vehicle comprising a head-up display system according to any preceding claim, wherein the sensing means (18) is mounted proximate an interior rear view mirror (16) of the vehicle.

FIG. 1

FIG. 2

FIG. 5

FIG. 3

FIG. 4

FIG. 6a

(A)                                              (B)

224 ┐ MULTIPLY AMBIENT
      INTENSITY A BY
      CONTRAST RATIO TO
      GET DESIRED OUTPUT
      INTENSITY A

226 ┐ MULTIPLY AMBIENT
      INTENSITY B BY
      CONTRAST RATIO TO
      GET DESIRED OUTPUT
      INTENSITY B

228 ┐ MULTIPLY AMBIENT
      INTENSITY C BY
      CONTRAST RATIO TO
      GET DESIRED OUTPUT
      INTENSITY C

230 ┐ FILTER & HYSTERESIS
      OUTPUT INTENSITY A

232 ┐ FILTER & HYSTERESIS
      OUTPUT INTENSITY B

234 ┐ FILTER & HYSTERESIS
      OUTPUT INTENSITY C

236 ┐ OUTPUT RESULTANT
      SIGNALS A, B AND C

FIG. 6b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 340 485 (KANTO SEIKI) <br> * abstract; figures 3,6-16 * <br> * column 2, line 49 - column 3, line 45 * <br> * column 8, line 15 - column 15, line 25 * | 1,7-13 | G02B27/00 <br> G09G5/10 |
| Y | | 2-4 | |
| | --- | | |
| X | WO-A-8 809 942 (FLIGHT DYNAMICS) <br> * page 16, line 8 - line 27; figure 3 * | 1,7,8,10 | |
| | --- | | |
| P,Y | PATENT ABSTRACTS OF JAPAN <br> vol. 17, no. 51 (P-1479)2 February 1993 <br> & JP-A-42 64 487 ( OMRON ) 21 September 1992 <br> * abstract * | 2-4 | |
| | --- | | |
| X | SOCIETY FOR INFORMATION DISPLAY - INTERNATIONAL SYMPOSIUM . DIGEST OF TECHNICAL PAPERS <br> vol. XIX, May 1988, ANAHEIM, CALIFORNIA, USA <br> pages 178 - 181 <br> R. MERRIFIELD 'The ABC's of Automatic Brightness Control' <br> * the whole document * | 1,7,8,10 | TECHNICAL FIELDS SEARCHED (Int. Cl.5) |
| | --- | | G02B <br> G09G |
| A | US-A-4 965 574 (A. FUKUSHIMA ET AL.) <br><br> * column 1, line 28 - line 55 * <br> * column 2, line 1 - column 4, line 60; figures 1-5 * | 1,2,4,7,8 | |

-----

The present search report has been drawn up for all claims

| Place of search | Date of completion of the search | Examiner |
|---|---|---|
| BERLIN | 23 JULY 1993 | SAAM C. |